# FASCICULE DE BREVET EUROPEEN

(11) **EP 3 090 965 B1**
(45) Date de publication et mention de la délivrance du brevet: **13.09.2017**
(21) Numéro de dépôt: 16168020.2
(22) Date de dépôt: 03.05.2016
(51) Int. Cl.: B65F 1/10, B65G 65/48

(54) **DISPOSITIF DE TRANSFERT D'AU MOINS UN OBJET**
VORRICHTUNG ZUM TRANSFER MINDESTENS EINES OBJEKTS
DEVICE FOR TRANSFERRING AT LEAST ONE OBJECT

(30) Priorité: 06.05.2015 FR 1554055
(43) Date de publication de la demande: 09.11.2016
(73) Titulaire: Akaze, 49450 Saint Macaire en Mauges (FR)
(72) Inventeur: BEILLOUET, Bruno, 49450 SAINT MACAIRE EN MAUGES (FR)
(74) Mandataire: Godineau, Valérie

(56) Documents cités:
- EP-A1- 1 415 937
- EP-A1- 1 508 535
- EP-A2- 0 696 781
- WO-A1-2011/061845

## Description

La présente invention concerne un dispositif de transfert d'au moins un objet.

De nombreux objets nécessitent d'être transférés d'un emplacement à un autre, le transfert devant être tracé. Tel est le cas par exemple de la collecte d'objets devant être rendus. Ainsi, dans le cas d'une collecte de linge, chaque article est identifié à l'aide d'un support de données, tel qu'une étiquette RFID (radio frequency identification) qui est lue par un lecteur disposé dans la zone de collecte. Toutefois les solutions existantes ne donnent pas satisfaction, car des erreurs d'inventaire sont régulièrement constatées.

D'autres solutions de dispositifs de transfert sont décrites dans les brevets EP 1415937 (qui divulgue un dispositif selon le préambule de la revendication 1), WO 2011/061845, EP 1508535 ou EP 0696781. Ces solutions souffrent des mêmes inconvénients que ceux évoqués précédemment.

Un but de la présente invention est donc de proposer un dispositif de transfert du type précité, dont la configuration permet une traçabilité améliorée du transfert.

À cet effet, l'invention a pour objet un dispositif de transfert d'au moins un objet, ledit dispositif comprenant une enceinte, dite de transfert, une zone de chargement de l'enceinte en objet, avec laquelle ladite enceinte est apte à communiquer, une zone de déchargement de l'enceinte en objet avec laquelle ladite enceinte est apte à communiquer, lesdites zones de chargement et de déchargement étant distinctes, des moyens d'acquisition de données relatives audit au moins un objet à l'intérieur de l'enceinte, au moins une partie desdits moyens d'acquisition étant disposée dans une zone, dite d'acquisition de données extérieure à l'enceinte, des moyens d'isolation de la partie des moyens d'acquisition de données disposés dans la zone d'acquisition de données d'au moins la zone de chargement, ces moyens d'isolation étant configurés pour empêcher au moins toute acquisition de données relatives à un objet présent dans ladite zone de chargement, des moyens d'empêchement/autorisation d'une acquisition de données relatives à un éventuel objet présent dans l'enceinte, au moins une partie de l'enceinte étant montée mobile pour permettre à l'enceinte de présenter successivement au moins trois configurations, à savoir une première configuration, dite de chargement, dans laquelle l'enceinte est en communication avec la zone de chargement de l'enceinte par une ouverture de l'enceinte appelée ouverture de chargement de l'enceinte, la communication de l'enceinte avec la zone de déchargement est fermée, et l'acquisition de données relatives à un éventuel objet présent dans l'enceinte par les moyens d'acquisition de données est empêchée, une deuxième configuration dite d'acquisition de données dans laquelle, la communication de l'enceinte avec la zone de chargement est fermée, et l'acquisition de données relatives à un éventuel objet présent dans l'enceinte par les moyens d'acquisition de données est autorisée et une troisième configuration, dite de déchargement, dans laquelle l'enceinte est en communication avec la zone de déchargement par une ouverture de l'enceinte appelée ouverture de déchargement de l'enceinte, et la communication de l'enceinte avec la zone de chargement est fermée
caractérisé en ce que les moyens d'isolation de la partie des moyens d'acquisition de données disposée dans la zone d'acquisition de données comprennent une enveloppe venant à recouvrement partiel des moyens d'acquisition de données disposés dans ladite zone, cette enveloppe étant imperméable aux rayonnements, cette enveloppe formant une chambre de logement desdits moyens d'acquisition de données jouxtant l'enceinte et ouverte en direction de l'enceinte au moins en configuration d'acquisition de données de ladite enceinte.

Grâce à la conception du dispositif de transfert, l'acquisition de données relatives à un objet présent dans la zone de chargement pendant l'acquisition de données relatives à un ou des objets présents dans l'enceinte est empêchée. Grâce à la conception du dispositif de transfert, chaque objet disposé à l'intérieur de l'enceinte est, en configuration d'acquisition de données, inaccessible depuis la zone de chargement, pour éviter d'être récupéré au niveau de la zone de chargement. Il en résulte une fiabilité élevée des données acquises.

De préférence, dans la configuration d'acquisition de données, la communication de l'enceinte avec la zone de déchargement est fermée.

De préférence, dans la configuration de déchargement, l'acquisition de données relatives à un éventuel objet dans l'enceinte par les moyens d'acquisition de données est empêchée. Il en résulte une fiabilité accrue du dispositif.

De préférence, les moyens d'acquisition de données étant des moyens d'acquisition activables/désactivables, les moyens d'empêchement/autorisation d'une acquisition de données relatives à un éventuel objet présent dans l'enceinte comprennent des moyens de commande d'activation/désactivation desdits moyens d'acquisition de données, lesdits moyens d'acquisition de données étant configurés pour être activés en configuration d'acquisition de données de l'enceinte et désactivés au moins en configuration de chargement, de préférence en configurations de chargement et de déchargement de l'enceinte. La réalisation des moyens d'acquisition de données sous forme de moyens d'acquisition activables/désactivables permet de limiter l'usure desdits moyens d'acquisition, et d'accroître la fiabilité de l'acquisition des données. En particulier, dans le cas de moyens d'acquisition de données utilisant le rayonnement radio fréquence, il en résulte une réduction du risque de fuite d'ondes et une limitation de l'endommagement des antennes, généralement intégrées à de tels moyens d'acquisition de données.

De préférence, les moyens d'empêchement/autorisation d'une acquisition de données relatives à un éventuel objet présent dans l'enceinte comprennent des parties de l'enceinte qui comporte une ou des parties d'enceinte, perméables aux rayonnements, interposables entre la zone d'acquisition de données et l'intérieur de l'enceinte en configuration d'acquisition de données, et une ou des parties d'enceinte, imperméables aux rayonnements, interposables entre la zone d'acquisition de données et l'intérieur de l'enceinte au moins en configuration de chargement de l'enceinte, de préférence en configurations de chargement et de déchargement de l'enceinte.

De préférence, l'ouverture de déchargement de l'enceinte est, en configuration de déchargement de l'enceinte, positionnée en partie basse de l'enceinte pour un déchargement gravitaire. Il en résulte une simplicité d'utilisation du dispositif de transfert.

De préférence, le dispositif comprend un bâti support de l'enceinte, et au moins la partie des moyens d'acquisition de données disposée dans la zone d'acquisition de données est, de préférence, montée fixe sur ledit bâti support.

De préférence, la partie mobile de l'enceinte est montée mobile à rotation ou en translation par rapport audit bâti support.

De préférence, l'enceinte est formée par au moins deux pièces aptes à être animées d'un déplacement relatif l'une par rapport à l'autre, au moins l'une des pièces formant la partie mobile de l'enceinte. En variante, l'enceinte peut être réalisée sous forme d'un ensemble d'un seul tenant.

De préférence, lesdites pièces affectent chacune la forme d'un cylindre, lesdits cylindres étant montés coaxiaux et disposés l'un à l'intérieur de l'autre, le cylindre externe étant muni, au niveau de sa paroi périphérique cylindrique de délimitation, au moins d'une ouverture et d'une zone perméable aux rayonnements, ledit cylindre interne étant muni, au niveau de sa paroi périphérique cylindrique de délimitation, d'une ouverture, lesdits cylindres étant montés sur le bâti support, solidaires en rotation autour d'un axe commun de manière contrarotative, les ouvertures des cylindres externe et interne, aptes à fermer l'ouverture de chargement de l'enceinte, étant positionnables en regard l'une de l'autre et en regard d'un premier volume extérieur à l'enceinte formant la zone de chargement de l'enceinte en configuration de chargement de l'enceinte, les ouvertures des cylindres externe et interne, aptes à former l'ouverture de déchargement de l'enceinte, étant positionnables en regard l'une de l'autre et en regard d'un deuxième volume extérieur à l'enceinte formant la zone de déchargement de l'enceinte en configuration de déchargement de l'enceinte, la zone perméable aux rayonnements du cylindre externe et l'ouverture du cylindre interne étant positionnables en regard l'une de l'autre et en regard de la zone d'acquisition de données en configuration d'acquisition de données. Il est ainsi possible, en un seul mouvement de rotation, de confiner les objets, d'acquérir les données relatives aux objets contenus à l'intérieur de l'enceinte et éventuellement, de les évacuer par gravité, sans possibilité de récupérer les objets disposés dans l'enceinte après acquisition des données relatives auxdits objets.

De préférence, le dispositif comprend des moyens anti-retour de l'enceinte en configuration de chargement configurés pour, en configuration d'acquisition de données de l'enceinte, empêcher le retour de l'enceinte, en configuration de chargement avant passage par la configuration de déchargement, lesdits moyens anti-retour étant de préférence des moyens activables/désactivables, lesdits moyens anti-retour étant activables au moins en configuration d'acquisition de données de l'enceinte lors du passage de l'enceinte de la configuration de chargement à la configuration d'acquisition de données et désactivables en configuration de déchargement de l'enceinte.

De préférence, le dispositif comprend des moyens de rappel de l'enceinte en configuration de chargement de l'enceinte.

De préférence, le bâti support délimite un volume formant au moins une partie de la zone de déchargement, cette zone de déchargement comprenant, au niveau de la zone de transition avec l'enceinte, un capteur de présence et en ce que les moyens anti-retour sont, en configuration de déchargement de l'enceinte, configurés pour être désactivés en fonction des signaux reçus par ledit capteur. Il est ainsi possible d'empêcher tout retour de l'enceinte en configuration de chargement et donc, tout nouveau chargement de l'enceinte lorsque la zone de déchargement est pleine. Il est également possible de n'autoriser le retour de l'enceinte à la zone de chargement que lorsque la présence d'objet a été constatée en configuration de déchargement de l'enceinte, en lien avec les données acquises en configuration d'acquisition de données.

De préférence, la partie des moyens d'acquisition de données disposée dans la zone d'acquisition de données comprend un lecteur de données apte à lire, dans un périmètre prédéterminé, sans contact, les données de supports de données aptes à être associés aux objets à transférer.

L'invention sera bien comprise à la lecture de la description suivante d'exemples de réalisation, en référence aux dessins annexés dans lesquels :
- La figure 1 représente une vue en perspective d'un dispositif conforme à l'invention.
- Les figures 2A et 2B représentent des vues partiellement éclatées du dispositif de la figure 1.
- Les figures 3 et 3A représentent, sous forme de vues partielles en perspective et en coupe, l'enceinte en configuration de chargement.
- Les figures 4 et 4A représentent, sous forme de vues partielles en perspective et en coupe, l'enceinte lors de son passage de la configuration de chargement à la configuration d'acquisition de données.
- Les figures 5 et 5A représentent, sous forme de vues partielles en perspective et en coupe, l'enceinte en configuration d'acquisition de données.
- Les figures 6 et 6A représentent, sous forme de vues partielles en perspective et en coupe, l'enceinte lors du passage de la configuration d'acquisition de données à la configuration de déchargement.
- Les figures 7 et 7A représentent, sous forme de vues partielles en perspective et en coupe, l'enceinte en configuration de déchargement.
- Les figures 8, 9, 10 et 8A, 9A, 10A représentent respectivement, sous forme de vues partielles en perspective et en coupe, l'enceinte lors de son retour de la configuration de déchargement à la configuration de chargement.
- La figure 11 représente une vue en perspective d'un autre mode de réalisation d'un dispositif conforme à l'invention.
- Les figures 12 à 15 représentent, sous forme de vues en coupe, le passage de l'enceinte de la configuration de chargement à la configuration de déchargement, et son retour à la configuration de chargement.

Comme mentionné ci-dessus, le dispositif 1 de transfert, objet de l'invention, est plus particulièrement destiné à permettre la traçabilité d'un objet transféré d'un endroit à un autre.

Ce dispositif comprend une enceinte 2 de transfert, une zone 3 de chargement de l'enceinte en au moins un objet 30, avec laquelle ladite enceinte 2 est apte à communiquer, une zone 4 de déchargement de l'enceinte 2 en au moins un objet 30, avec laquelle ladite enceinte 2 est apte à communiquer, lesdites zones 3 et 4 étant distinctes l'une de l'autre, c'est-à-dire disposées physiquement en des endroits différents.

Le dispositif comprend encore des moyens 5 d'acquisition de données relatives audit au moins un objet à l'intérieur de l'enceinte, au moins une partie de ces moyens 5 d'acquisition de données étant disposée dans une zone dite d'acquisition de données extérieure à l'enceinte 2.

Ces moyens 5 d'acquisition de données peuvent affecter un grand nombre de formes et se présentent par exemple sous forme de moyens de visualisation de l'objet à l'intérieur de l'enceinte, tels qu'une caméra à reconnaissance de forme, ou de moyens d'identification de données portés par ledit objet 30. Ainsi, dans les exemples représentés, la partie des moyens 5 d'acquisition de données disposée dans la zone d'acquisition de données du dispositif comprend un lecteur 18 de données apte à lire, dans un périmètre prédéterminé, sans contact, les données de support 31 de données aptes à être associées aux objets 30 à transférer. Le support 31 de données peut par exemple être un support d'identification électronique formé d'un ensemble puce/antenne, tel qu'une puce, encore appelée étiquette, RFID, tandis que le lecteur 18 peut également être un lecteur formé d'une carte RFID et d'une antenne. Ce lecteur est ainsi apte à émettre un signal radio en direction du support de données d'un objet contenu à l'intérieur de l'enceinte. Ce support de données transmet en retour les données qu'il contient au lecteur.

Avantageusement, la partie 102 est équipée, du côté de l'intérieur de l'enceinte, d'une partie 102A perméable aux rayonnements et agencée pour maintenir le ou les objets présents dans l'enceinte à écartement de ladite partie 102. Ainsi dans le cas où le ou les objets destinés à être introduits dans l'enceinte sont munis de puces RFID et que la partie 102 est métallique, le maintien écarté du ou des objets par rapport à la partie métallique permet d'améliorer la fiabilité de lecture des puces RFID qui, si elles étaient en contact avec la partie métallique, risqueraient de ne pas pouvoir être lues.

Quel que soit les moyens 5 d'acquisition de données, la difficulté est d'éviter des lectures parasites. À cet effet, le dispositif comprend des moyens 7 d'isolation de la partie des moyens 5 d'acquisition de données disposée dans la zone 6 d'acquisition de données d'au moins la zone 3 de chargement. Ces moyens 7 d'isolation sont configurés pour empêcher au moins toute acquisition de données relatives à un objet présent dans ladite zone 3 de chargement. Le dispositif comprend encore des moyens 10 d'empêchement/autorisation d'une acquisition de données relatives à un éventuel objet 30 présent dans l'enceinte. Ces moyens seront décrits ci-après.

L'enceinte 2 présente quant à elle au moins une partie montée mobile pour permettre à l'enceinte de présenter successivement au moins trois configurations, à savoir une première configuration de chargement, une deuxième configuration d'acquisition de données et une troisième configuration de déchargement avant retour à la configuration de chargement.

Indépendamment de sa réalisation, dans la première configuration de chargement, l'enceinte 2 est en communication avec la zone 3 de chargement de l'enceinte par une ouverture de l'enceinte 2 appelée ouverture 8 de chargement de l'enceinte. La communication de l'enceinte 2 avec la zone 4 de chargement est fermée et l'acquisition de données relatives à un éventuel objet 30 présent dans l'enceinte 2 par les moyens 5 d'acquisition de données est empêchée.

En deuxième configuration, dite d'acquisition de données, la communication de l'enceinte 2 avec la zone 3 de chargement est fermée et l'acquisition de données relatives à un éventuel objet présent dans l'enceinte 2 par les moyens 5 d'acquisition de données est autorisée. En outre, dans cette configuration, de préférence, la communication de l'enceinte 2 avec la zone 4 de déchargement est fermée.

Dans la troisième configuration de déchargement, l'enceinte 2 est en communication avec la zone 4 de déchargement par une ouverture de l'enceinte appelée ouverture 9 de déchargement de l'enceinte, et la communication de l'enceinte avec la zone 3 de chargement est fermée. Généralement, l'acquisition de données relatives à un éventuel objet 30 dans l'enceinte 2 par les moyens 5 d'acquisition de données est également empêchée dans cette configuration de déchargement.

Le dispositif comprend encore un bâti 11 support de l'enceinte et la partie des moyens 5 d'acquisition de données disposée dans la zone 6 d'acquisition de données est montée fixe sur le bâti 11 support.

La partie mobile de l'enceinte 2 est montée mobile à rotation ou en translation par rapport au bâti 11 support.

Dans la version la plus simple, non représentée, l'enceinte est formée uniquement d'une partie mobile en un seul tenant. Cette enceinte est, par exemple, une enceinte cylindrique pourvue d'une seule ouverture sur sa paroi latérale périphérique cylindrique et est équipée, au niveau de ses faces d'extrémité, d'un moyen d'entraînement en rotation, tel qu'une manivelle, pour un entraînement en rotation de l'enceinte autour d'un axe dit horizontal, passant par l'axe longitudinal central du cylindre.

L'enceinte passe alors d'une configuration de chargement dans laquelle l'ouverture de l'enceinte appelée, dans cette configuration, ouverture de chargement, est orientée par exemple vers le haut, pour permettre un chargement de l'enceinte en objet.

L'enceinte est ensuite déplacée d'un quart de tour pour positionner l'ouverture de l'enceinte en regard de la zone 6 d'acquisition de données extérieure à l'enceinte et logeant le lecteur 18. Cette position de l'enceinte correspond à la configuration d'acquisition de données de l'enceinte.

Le déplacement est poursuivi d'un quart de tour pour un positionnement en bas de ladite ouverture, qui forme alors une ouverture de déchargement de l'enceinte. L'enceinte est alors en configuration de déchargement.

Grâce au fait que l'ouverture 9 de déchargement de l'enceinte est en configuration de déchargement de l'enceinte positionnée en partie basse de l'enceinte, il en résulte une possibilité de déchargement gravitaire.

Les zones de chargement et de déchargement peuvent être formées par des parties fixes de bâti support disposées autour de l'enceinte, en entourant l'ouverture de chargement pour la partie du bâti délimitant la zone de chargement, et en entourant l'ouverture de déchargement pour la partie du bâti délimitant la zone de déchargement.

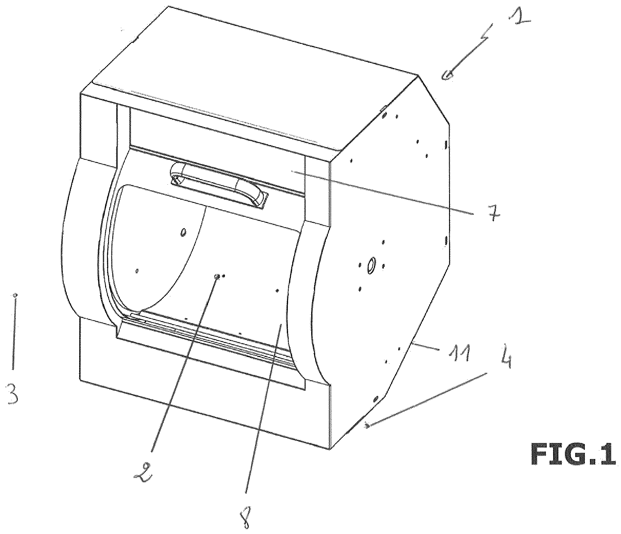

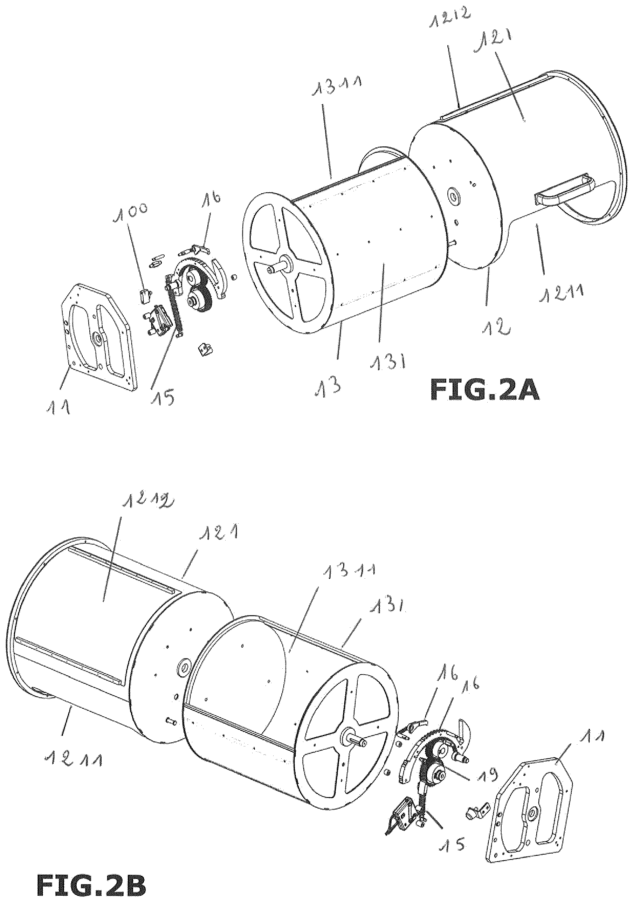

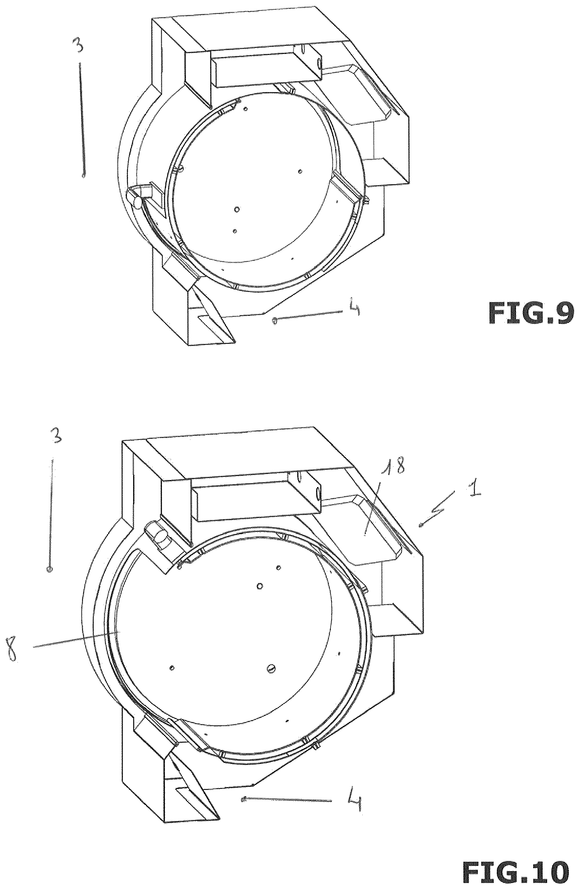

Dans un deuxième mode de réalisation de l'invention conforme aux figures 1 à 10A, l'enceinte 2 est formée par au moins deux pièces 12, 13 aptes à être animées d'un déplacement relatif l'une par rapport à l'autre. Comme lesdites pièces sont chacune mobiles, ces pièces forment la partie mobile de l'enceinte 2 qui est, dans cet exemple, dépourvue de parties fixes.

Ces pièces 12, 13 affectent chacune la forme d'un cylindre 121, 131. Les cylindres 121, 131 sont montés coaxiaux et disposés l'un à l'intérieur de l'autre. Le cylindre 121 externe est muni, au niveau de sa paroi périphérique cylindrique de délimitation, au moins d'une ouverture 1211 et d'une zone 1212 perméable aux rayonnements. Le cylindre 131 interne est muni, au niveau de sa paroi périphérique cylindrique de délimitation, d'une ouverture 1311. Les cylindres 121 et 131 sont montés sur le bâti 11 support, solidaires en rotation autour d'un axe commun, de manière contrarotative.

La zone 1212 perméable aux rayonnements est décalée angulairement de l'ouverture 1211 au niveau de la paroi périphérique cylindrique du cylindre 121 externe. Cette zone 1212 perméable aux rayonnements du cylindre externe est ici formée par une ouverture du cylindre fermée par une plaque réalisée en un matériau perméable aux rayonnements, tel qu'une plaque transparente en matière synthétique.

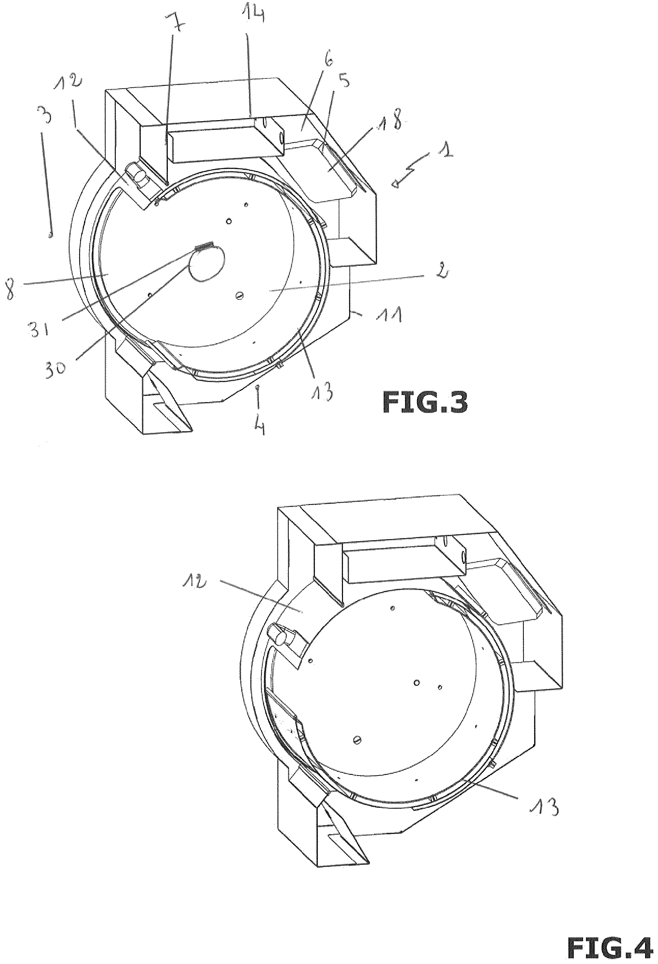

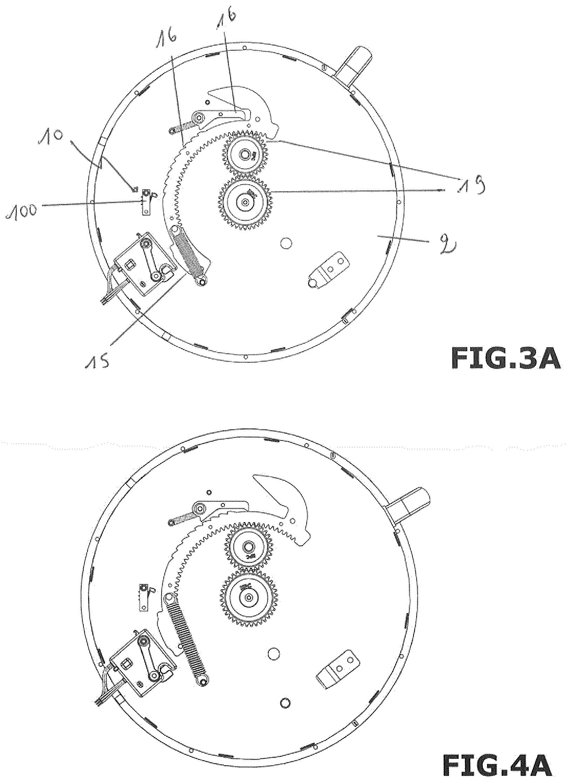

Les ouvertures 1211 et 1311 des cylindres externe 121 et interne 131 sont positionnées en regard l'une de l'autre et en regard d'un premier volume extérieur à l'enceinte formant la zone 3 de chargement de l'enceinte en configuration de chargement de l'enceinte 2. Ces ouvertures 1211 et 1311 forment alors l'ouverture 8 de chargement de l'enceinte 2. Ce positionnement relatif des cylindres est illustré à la figure 3.

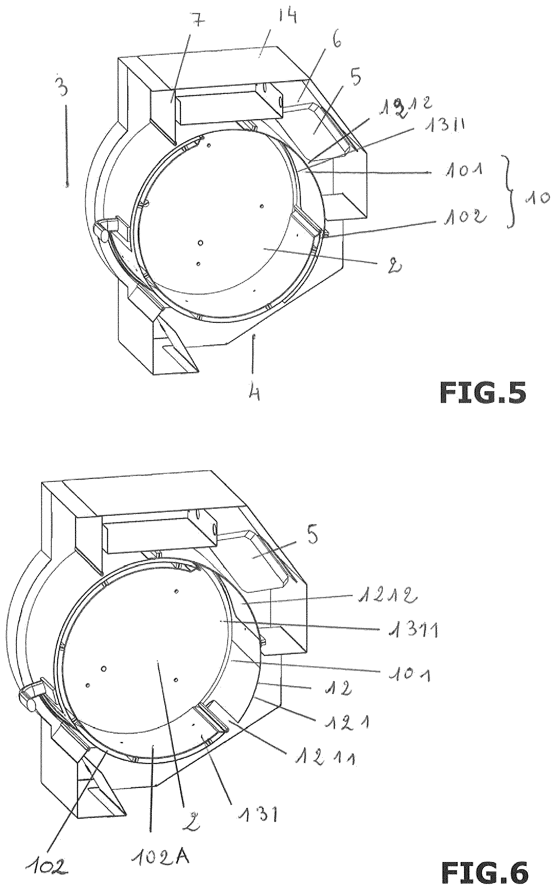

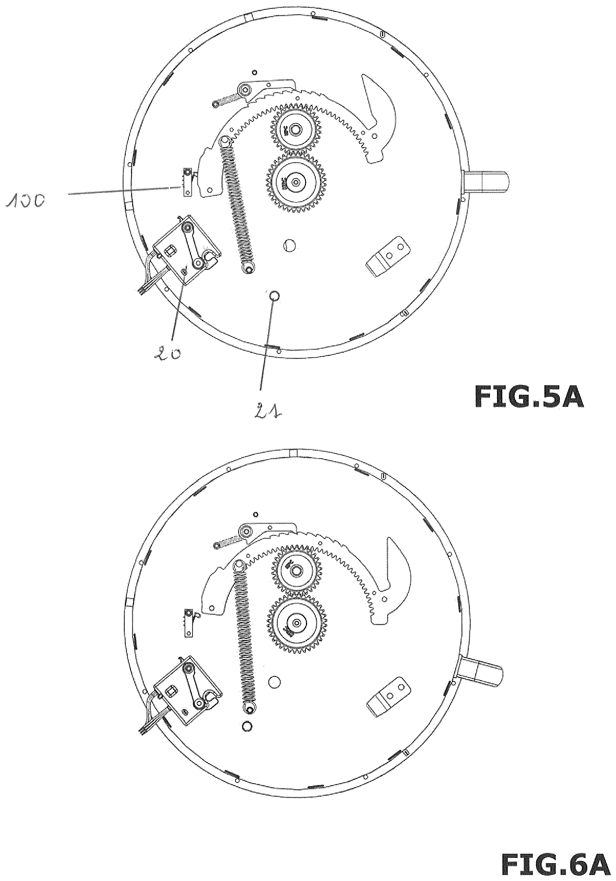

La zone 1212 perméable aux rayonnements du cylindre 121 externe et l'ouverture 1311 du cylindre 131 interne sont positionnées en regard l'une de l'autre et en regard de la zone 6 d'acquisition de données en configuration d'acquisition de données, comme illustré à la figure 5.

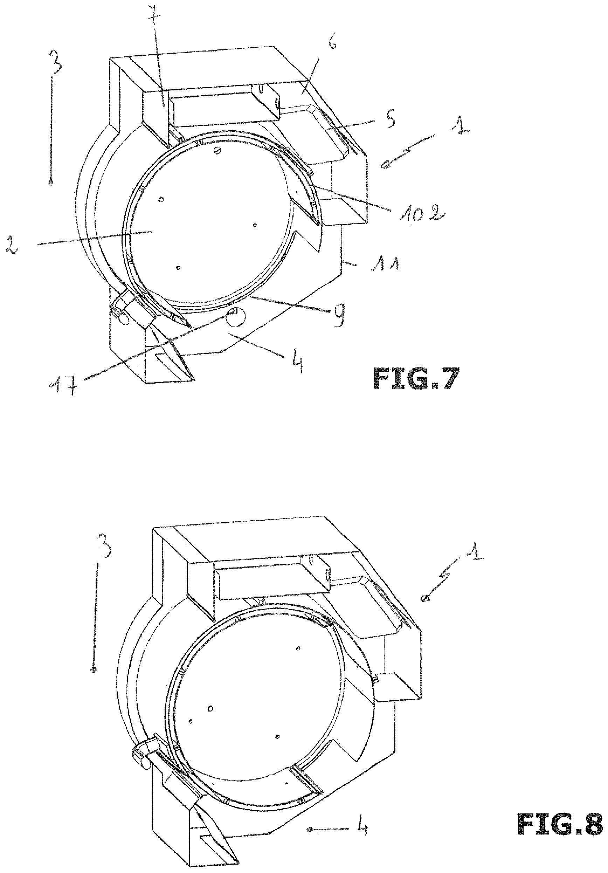

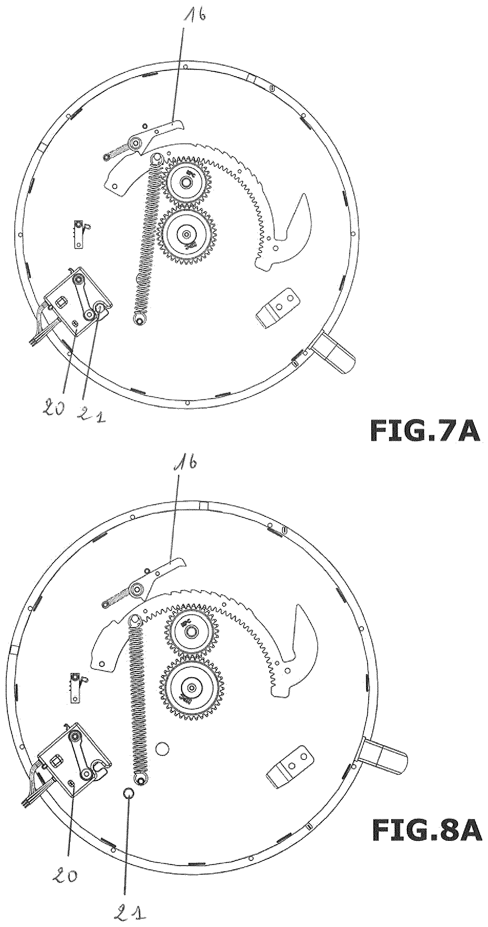

Les ouvertures 1211 et 1311 des cylindres externe 121 et interne 131 sont positionnées en regard l'une de l'autre, et en regard d'un deuxième volume extérieur à l'enceinte formant la zone 4 de déchargement de l'enceinte 2 en configuration de déchargement de l'enceinte 2. Ces ouvertures 1211 et 1311 des cylindres externe 121 et interne 131 sont, à l'état positionné en regard, aptes à former l'ouverture 9 de chargement de l'enceinte 2. Cette configuration de déchargement est illustrée à la figure 7.

Le cylindre externe est muni extérieurement d'une poignée de manoeuvre pour permettre son entraînement en rotation par un opérateur situé en regard de l'ouverture de chargement en configuration de chargement de l'enceinte. Pour permettre un déplacement parallèle des cylindres interne et externe, lesdits cylindres sont montés solidaires en rotation par un engrenage représenté en 19 aux figures. Ainsi, dans l'exemple représenté, le cylindre externe porte extérieurement, au niveau de son flasque d'extrémité, une crémaillère en arc de cercle apte à s'engrener avec un premier pignon, ce premier pignon rotatif d'axe parallèle à l'axe de rotation du cylindre s'engrène lui-même avec un deuxième pignon d'axe parallèle. Ce deuxième pignon est monté solidaire en rotation d'un bout d'arbre équipant extérieurement le flasque d'extrémité du cylindre interne. Le déplacement en rotation dans un sens du cylindre externe via la poignée de manoeuvre entraîne par engrènement de la crémaillère avec la série des pignons le déplacement du cylindre interne suivant un sens opposé. Une butée de fin de course peut être prévue pour limiter le déplacement angulaire du cylindre externe.

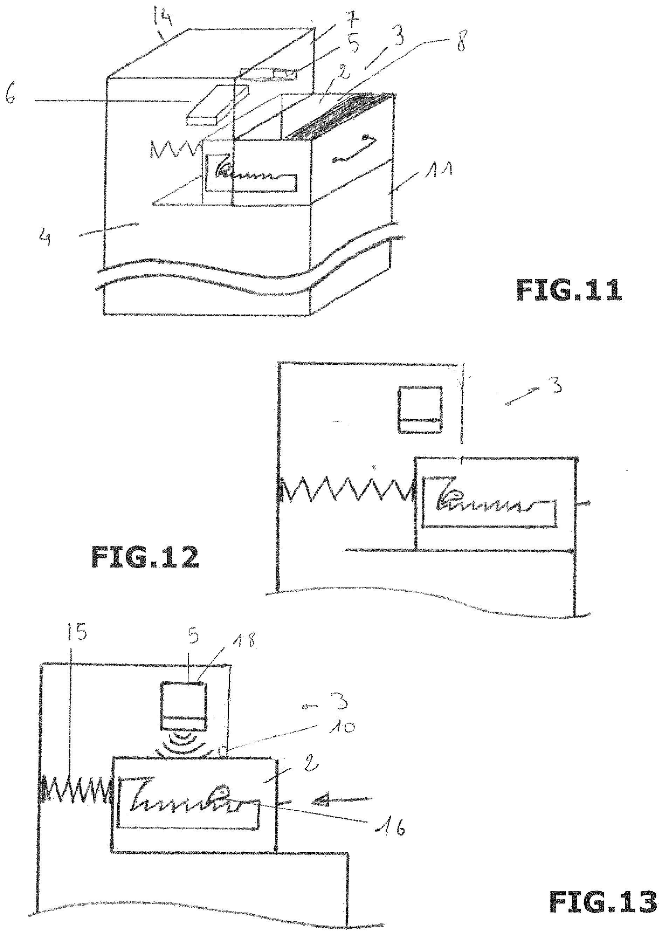

Dans l'exemple représenté aux figures 11 à 15, l'enceinte comprend non plus uniquement une partie mobile formée d'une ou deux pièces, mais une partie fixe et une partie mobile. La partie mobile de l'enceinte 2 se présente sous forme d'un tiroir monté mobile à coulissement à l'intérieur d'un bâti 11 support se présentant sous forme d'un volume de forme générale parallélipédique muni en façade d'un décrochement pour former une surface d'appui du tiroir en configuration de chargement de l'enceinte. Ce bâti support affecte extérieurement la forme d'un meuble de type armoire. Le fond du tiroir est ouvert, la surface d'appui du bâti support ferme le fond dudit tiroir. La partie fixe de l'enceinte est donc formée au moins par la partie du bâti support fermant le fond du tiroir en position partiellement sortie du tiroir du bâti.

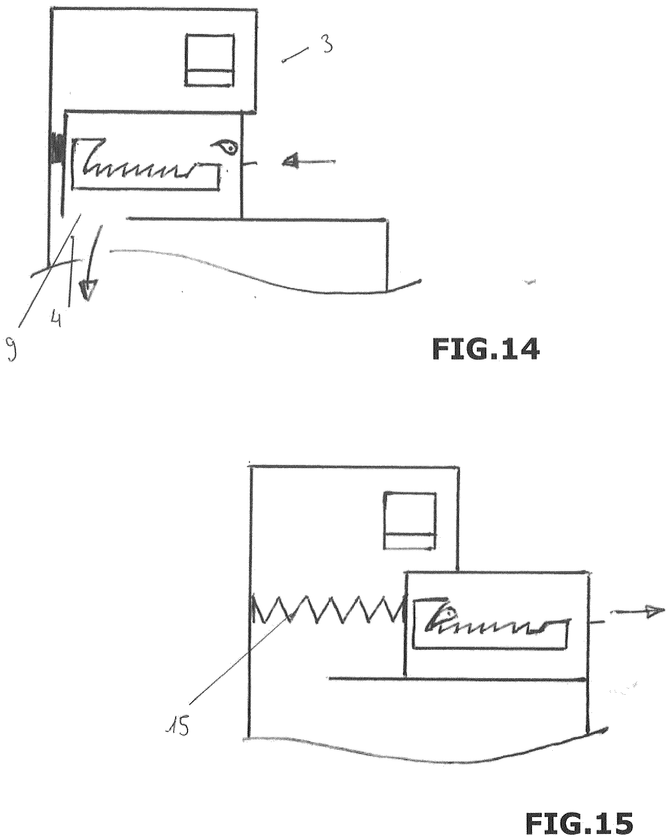

La zone de chargement de l'enceinte se situe au niveau de ce décrochement et est formée par le volume qui s'étend au-dessus du tiroir, comme l'illustre la figure 11. La partie fixe de l'enceinte formant fond du tiroir se prolonge à l'intérieur du volume du bâti support et s'interrompt avant d'atteindre la paroi du bâti apte à former le fond de l'armoire, pour délimiter entre ladite surface et le fond de l'armoire un espace libre qui forme l'ouverture 9 de déchargement de l'enceinte, comme illustré à la figure 14.

Le bâti support 11 loge encore le lecteur 18 des moyens 5 d'acquisition de données. Ce lecteur 18 est disposé dans la partie du bâti s'étendant entre la paroi du bâti formant le dessus de l'armoire et l'espace balayé par le tiroir au cours de son déplacement à coulissement à l'intérieur du bâti support. Cette zone forme la zone 6 d'acquisition de données. Ainsi, le tiroir est entraîné en déplacement à coulissement à l'intérieur du bâti support jusqu'à une position dans laquelle il s'étend à l'aplomb du lecteur des moyens 5 d'acquisition de données, de sorte que le contenu du tiroir peut être lu par le lecteur. Dans cette position, le dessus du tiroir est inaccessible depuis la zone de chargement. En effet, le dessus du tiroir est partiellement fermé côté façade du tiroir, comme illustré à la figure 11, pour permettre en position encore partiellement sortie du tiroir du bâti support, d'empêcher un accès à l'intérieur du tiroir, comme illustré à la figure 13.

Une fois l'acquisition de données effectuée, le déplacement à coulissement du tiroir est poursuivi à l'intérieur du bâti support, jusqu'à la configuration de déchargement de l'enceinte dans laquelle le fond ouvert du tiroir de l'enceinte s'étend à l'aplomb de l'espace laissé libre à l'intérieur du bâti support, et qui forme l'ouverture 9 de déchargement décrite ci-dessus. Le déchargement s'opère alors par vidange gravitaire. Dans cet exemple de réalisation, le lecteur est activable/désactivable.

Indépendamment du mode de réalisation retenu pour l'enceinte, le dispositif peut encore comprendre, pour garantir une utilisation optimale par l'opérateur du dispositif et en particulier un déplacement sûr de la partie mobile de l'enceinte pour permettre un passage successif de l'enceinte de la configuration de chargement à la configuration d'acquisition de données puis à la configuration de déchargement, des moyens anti-retour 16 de l'enceinte en configuration de chargement. Ces moyens anti-retour 16 sont configurés pour empêcher, en configuration d'acquisition de données de l'enceinte, le retour de l'enceinte en configuration de chargement avant passage par la configuration de déchargement. Ces moyens anti-retour 16 peuvent être supprimés lorsque, par exemple l'entraînement en déplacement de la partie mobile de l'enceinte s'opère automatiquement, par exemple à l'aide d'un vérin pour l'enceinte de type tiroir ou à l'aide d'un arbre motorisé pour l'enceinte de type cylindre.

Lorsque l'entraînement en déplacement de la partie mobile de l'enceinte s'opère manuellement, il est préférable de prévoir ces moyens anti-retour 16. Ces moyens 16 anti-retour peuvent être à action permanente ou temporaire. Ainsi, dans l'exemple d'une enceinte cylindrique simplifiée à une seule ouverture comme mentionné ci-dessus, les moyens anti-retour peuvent être à action permanente et peuvent être configurés pour autoriser une rotation du cylindre dans un seul sens.

Dans l'exemple représenté aux figures, les moyens 16 anti-retour sont à action temporaire. Ces moyens 16 anti-retour sont donc des moyens activables/désactivables. Ces moyens 16 anti-retour sont activables, au moins en configuration d'acquisition de données de l'enceinte, lors du passage de l'enceinte de la configuration de chargement à la configuration d'acquisition de données, et désactivables en configuration de déchargement de l'enceinte.

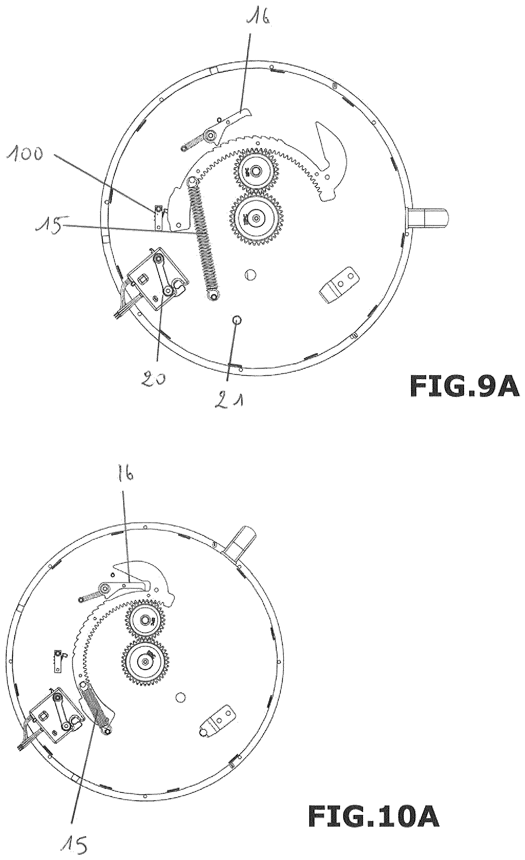

Dans les exemples représentés, ces moyens 16 anti-retour comprennent un cliquet monté fixe sur le bâti support. Ce cliquet coopère avec une denture à rocher porté par la partie mobile de l'enceinte. En configuration de déchargement, le cliquet est désengagé de la denture et est maintenu désengagé de la denture jusqu'au retour de l'enceinte en configuration de chargement. Le désengagement du cliquet peut être obtenu par un contact d'appui de formes complémentaires entre le cliquet et un élément porté par la partie mobile de l'enceinte, comme illustré à la figure 7A. Dans cet exemple, la denture à rocher est ménagée sur la partie de la crémaillère opposée à celle s'engrenant avec l'un des pignons. Le réenclenchement du cliquet qui se présente sous forme d'un levier pivotant est obtenu à l'aide d'une surface de came portée par la partie mobile de l'enceinte, comme illustré à la figure 10A. Ce réengagement s'opère en configuration de chargement de l'enceinte. Ce cliquet est équipé d'un ressort de rappel actif en position désengagée du cliquet de la denture.

Pour parfaire le fonctionnement de ces moyens anti-retour et éviter un retour de l'enceinte en configuration de chargement alors que la zone de déchargement est pleine, la zone 4 de déchargement comprend, au niveau de la zone de transition avec l'enceinte 2, un capteur 17 de présence, tel qu'une cellule photoélectrique. Les moyens 16 anti-retour comprennent donc encore un verrou 20 qui verrouille la partie mobile de l'enceinte en configuration de déchargement, tant que le signal fourni par la cellule photoélectrique correspond à un signal de présence d'objet dans la zone de transition, ce qui correspondrait à une zone de déchargement entièrement pleine.

À cet effet, la partie mobile de l'enceinte porte un pêne 21 qui vient, en configuration de déchargement, se verrouiller dans une gâche du verrou 20 et s'y maintient, jusqu'à émission d'un signal de commande de déverrouillage par la cellule photoélectrique. Les moyens 16 anti-retour sont donc, en configuration de déchargement de l'enceinte 2, configurés pour être désactivés en fonction des signaux reçus par ledit capteur 17 formé par la cellule photoélectrique.

Dans l'exemple des figures 11 à 15, les moyens anti-retour sont de conception similaire à celle décrite ci-dessus, le cliquet étant porté par le bâti support et la denture à rocher par le tiroir.

En variante, lesdits moyens anti-retour peuvent être réalisés sous la forme d'un système à roue libre, d'un système à coin ou système à frein.

Le dispositif comprend encore des moyens 15 de rappel de l'enceinte 2 en configuration de chargement de l'enceinte. Ces moyens 15 de rappel sont actifs sur la partie mobile de l'enceinte. Ces moyens 15 de rappel sont ici formés par un simple ressort qui s'étend entre le bâti support ou une partie fixe de l'enceinte et la partie mobile de l'enceinte, à savoir le cylindre externe dans l'exemple des figures 1 à 10A et le tiroir dans l'exemple des figures 11 à 15.

En variante, lesdits moyens de rappel peuvent être réalisés sous la forme d'un système utilisant la force de gravité, tel qu'un système à balourd ou à excentrique.

Comme mentionné ci-dessus, le dispositif comprend encore des moyens 7 d'isolation aptes à isoler la partie des moyens 5 d'acquisition de données disposée dans la zone 6 d'acquisition de données au moins de la zone de chargement.

Ces moyens 7 d'isolation comprennent une enveloppe 14 venant à recouvrement partiel des moyens 5 d'acquisition de données disposés dans ladite zone 6. Cette enveloppe 14 est imperméable aux rayonnements. Cette enveloppe 14 forme une chambre de logement desdits moyens d'acquisition de données jouxtant l'enceinte 6 et ouverte en direction de l'enceinte 6 au moins en configuration d'acquisition de données de ladite enceinte 2.

Dans les deux exemples illustrés, cette enveloppe forme avec l'enceinte, en configuration d'acquisition de données de l'enceinte, un volume fermé, dit imperméable aux ondes, de sorte que le risque de fuite d'ondes à l'extérieur de l'enceinte est empêché ou réduit dans ladite configuration. Cette enveloppe peut affecter un grand nombre de formes et se confondre au moins partiellement avec le bâti support 11 du dispositif.

Le dispositif comprend encore des moyens 10 d'empêchement/autorisation d'une acquisition de données relatives à un éventuel objet présent dans l'enceinte 2. Ces moyens 10 d'empêchement/autorisation peuvent affecter un grand nombre de formes et peuvent être au moins partiellement communs aux moyens 7 d'isolation. Un même dispositif peut comporter un ou plusieurs types de moyens 10 d'empêchement/autorisation.

Deux exemples de réalisation des moyens 10 d'empêchement/autorisation sont illustrés. Ainsi, dans l'exemple représenté à la figure 5A, les moyens 5 d'acquisition de données sont des moyens d'acquisition activables/désactivables. Les moyens 10 d'empêchement/autorisation d'une acquisition de données relatives à un éventuel objet 30 présent dans l'enceinte comprennent des moyens 100 de commande d'activation/désactivation desdites moyens 5 d'acquisition de données. Les moyens 5 d'acquisition de données sont configurés pour être activés en configuration d'acquisition de données de l'enceinte 2 et désactivés au moins en configuration de chargement. En l'occurrence, ici, les moyens 5 d'acquisition de données sont configurés pour être désactivés en configuration de chargement et de déchargement de l'enceinte.

Ces moyens 100 de commande d'activation/désactivation se présentent sous forme d'un commutateur à front montant. Ce commutateur est monté fixe sur le bâti support. Lors de l'entraînement en déplacement du cylindre externe de l'enceinte, depuis la configuration de chargement de l'enceinte vers la configuration d'acquisition de données, une partie de la crémaillère, montée solidaire en rotation du cylindre extérieur, entre en contact avec le commutateur pour le faire commuter dans une position dans laquelle il active le lecteur situé dans la zone 6 d'acquisition de données. Le lecteur peut alors effectuer l'acquisition desdites données.

Au cours de la poursuite de l'entraînement en rotation du cylindre externe, le contact entre commutateur et crémaillère est interrompu. Le commutateur revient alors en position désactivée du lecteur de la zone 6 d'acquisition de données. Un commutateur similaire équipe le dispositif des figures 11 à 15.

Le dispositif des figures 1 à 10A comporte encore un deuxième type de moyens 10 d'empêchement/autorisation d'acquisition de données relatives à un éventuel objet présent dans l'enceinte 2. Ces moyens 10 d'empêchement/autorisation comprennent des parties 101, 102 de l'enceinte. En effet, l'enceinte comporte une ou des parties 101 d'enceinte perméables aux rayonnements interposables entre la zone 6 d'acquisition de données et l'intérieur de l'enceinte 2 en configuration d'acquisition de données, et une ou des parties 102 d'enceinte imperméables aux rayonnements interposables entre la zone 6 d'acquisition de données et l'intérieur de l'enceinte 2 au moins en configuration de chargement de l'enceinte, de préférence comme illustré, en configurations de chargement et de déchargement de l'enceinte 2.

Ainsi, dans l'exemple avec cylindres externe et interne tels que décrits ci-dessus, la paroi de délimitation périphérique de chaque cylindre est réalisée en un matériau imperméable aux rayonnements. Dans le cylindre externe, deux ouvertures représentées en 1211 et 1212 avec l'une des ouvertures, à savoir l'ouverture 1212 fermée par un matériau perméable aux rayonnements sont ménagées dans ladite paroi, pour former des parties perméables aux rayonnements dudit cylindre.

De même, la paroi de délimitation périphérique du cylindre interne est réalisée en un matériau imperméable aux rayonnements. Ce cylindre interne comprend, au niveau de ladite paroi, une ouverture 1311 qui forme la partie perméable aux rayonnements dudit cylindre. En configuration de chargement ou de déchargement de l'enceinte, les ouvertures 1211 du cylindre externe et 1311 du cylindre interne sont ménagées en regard l'une de l'autre pour ménager, en configuration de chargement, l'ouverture 8 de chargement de l'enceinte et, en configuration de déchargement, l'ouverture 9 de déchargement de l'enceinte. Dans ces configurations, la partie perméable aux rayonnements formée par l'ouverture 1212 du cylindre externe est neutralisée par la partie imperméable aux rayonnements de la paroi du cylindre interne qui vient doubler cette ouverture. La partie imperméable aux rayonnements de la paroi du cylindre interne vient en outre fermer la chambre délimitée par l'enveloppe contenant le lecteur de moyens d'acquisition de données.

En configuration d'acquisition de données, l'ouverture 1212 du cylindre externe et l'ouverture 1311 du cylindre interne sont en regard l'une de l'autre et du lecteur des moyens 5 d'acquisition de données et l'ouverture 1211 du cylindre externe est neutralisée par la partie imperméable aux rayonnements de la paroi du cylindre interne qui vient doubler cette ouverture. Cette configuration est illustrée aux figures 5, 5A. Dans cette configuration, la partie de l'enceinte, non accolée à la chambre formée par l'enveloppe 14, et l'enveloppe 14 délimitent un volume fermé isolant l'intérieur de l'enceinte de l'extérieur.

Comme l'illustrent les figures 3 à 10A, le fonctionnement du dispositif est simple, puisqu'il suffit d'entraîner en rotation le cylindre externe sur environ un tiers de tour au total pour obtenir le passage de l'enceinte de la configuration de chargement à la configuration d'acquisition de données, puis à la configuration de déchargement. Il en est de même aux figures 11 à 15, où il suffit de déplacer à coulissement le tiroir de sa position partiellement sortie du bâti support dans le sens d'une entrée dans le bâti support pour permettre le passage de l'enceinte de la configuration de chargement à la configuration d'acquisition de données, puis à la configuration de déchargement.

## Revendications

1. Dispositif (1) de transfert d'au moins un objet (30), ledit dispositif (1) comprenant une enceinte (2), dite de transfert, une zone (3) de chargement de l'enceinte (2) en objet (30), avec laquelle ladite enceinte (2) est apte à communiquer, une zone (4) de déchargement de l'enceinte (2) en objet (30) avec laquelle ladite enceinte (2) est apte à communiquer, lesdites zones de chargement (3) et de déchargement (4) étant distinctes, des moyens (5) d'acquisition de données relatives audit au moins un objet (30) à l'intérieur de l'enceinte, au moins une partie desdits moyens (5) d'acquisition étant disposée dans une zone (6), dite d'acquisition de données extérieure à l'enceinte (2), des moyens (7) d'isolation de la partie des moyens (5) d'acquisition de données disposés dans la zone (6) d'acquisition de données d'au moins la zone (3) de chargement, ces moyens d'isolation étant configurés pour empêcher au moins toute acquisition de données relatives à un objet présent dans ladite zone (3) de chargement, des moyens (10) d'empêchement/autorisation d'une acquisition de données relatives à un éventuel objet (30) présent dans l'enceinte, au moins une partie de l'enceinte (2) étant montée mobile pour permettre à l'enceinte (2) de présenter successivement au moins trois configurations, à savoir une première configuration, dite de chargement, dans laquelle l'enceinte (2) est en communication avec la zone (3) de chargement de l'enceinte par une ouverture de l'enceinte (2) appelée ouverture (8) de chargement de l'enceinte, la communication de l'enceinte (2) avec la zone (4) de déchargement est fermée, et l'acquisition de données relatives à un éventuel objet (30) présent dans l'enceinte (2) par les moyens (5) d'acquisition de données est empêchée, une deuxième configuration dite d'acquisition de données dans laquelle, la communication de l'enceinte (2) avec la zone (3) de chargement est fermée, et l'acquisition de données relatives à un éventuel objet présent dans l'enceinte (2) par les moyens (5) d'acquisition de données est autorisée et une troisième configuration, dite de déchargement, dans laquelle l'enceinte (2) est en communication avec la zone (4) de déchargement par une ouverture de l'enceinte appelée ouverture (9) de déchargement de l'enceinte (2), et la communication de l'enceinte (2) avec la zone (3) de chargement est fermée **caractérisé en ce que** les moyens (7) d'isolation de la partie des moyens (5) d'acquisition de données disposée dans la zone (6) d'acquisition de données comprennent une enveloppe (14) venant à recouvrement partiel des moyens (5) d'acquisition de données disposés dans ladite zone (6), cette enveloppe (14) étant imperméable aux rayonnements, cette enveloppe (14) formant une chambre de logement desdits moyens d'acquisition de données jouxtant l'enceinte (2) et ouverte en direction de l'enceinte (2) au moins en configuration d'acquisition de données de ladite enceinte (2).

2. Dispositif selon la revendication 1,
**caractérisé en ce que** dans la configuration d'acquisition de données, la communication de l'enceinte (2) avec la zone (4) de déchargement est fermée.

3. Dispositif selon l'une des revendications précédentes,
**caractérisé en ce que** dans la configuration de déchargement, l'acquisition de données relatives à un éventuel objet (30) dans l'enceinte (2) par les moyens (5) d'acquisition de données est empêchée.

4. Dispositif selon l'une des revendications précédentes,
**caractérisé en ce que** les moyens (5) d'acquisition de données étant des moyens d'acquisition activables/désactivables, les moyens (10) d'empêchement/autorisation d'une acquisition de données relatives à un éventuel objet (30) présent dans l'enceinte comprennent des moyens (100) de commande d'activation/désactivation desdits moyens (5) d'acquisition de données, lesdits moyens (5) d'acquisition de données étant configurés pour être activés en configuration d'acquisition de données de l'enceinte (2) et désactivés au moins en configuration de chargement, de préférence en configurations de chargement et de déchargement de l'enceinte (2).

5. Dispositif selon l'une des revendications précédentes,
**caractérisé en ce que** les moyens (10) d'empêchement/autorisation d'une acquisition de données relatives à un éventuel objet présent dans l'enceinte (2) comprennent des parties (101, 102) de l'enceinte (2) qui comporte une ou des parties (101) d'enceinte, perméables aux rayonnements, interposables entre la zone (6) d'acquisition de données et l'intérieur de l'enceinte (2) en configuration d'acquisition de données, et une ou des parties (102) d'enceinte, imperméables aux rayonnements, interposables entre la zone (6) d'acquisition de données et l'intérieur de l'enceinte (2) au moins en configuration de chargement de l'enceinte (2), de préférence en configurations de chargement et de déchargement de l'enceinte (2).

6. Dispositif selon l'une des revendications précédentes,
**caractérisé en ce que** l'ouverture (9) de déchargement de l'enceinte est, en configuration de déchargement de l'enceinte, positionnée en partie basse de l'enceinte (2) pour un déchargement gravitaire.

7. Dispositif selon l'une des revendications précédentes,
**caractérisé en ce qu'**il comprend un bâti (11) support de l'enceinte (2) et **en ce qu'**au moins la partie des moyens (5) d'acquisition de données disposée dans la zone (6) d'acquisition de données est, de préférence, montée fixe sur ledit bâti (11) support.

8. Dispositif selon la revendication 7,
**caractérisé en ce que** la partie mobile de l'enceinte (2) est montée mobile à rotation ou en translation par rapport audit bâti (11) support.

9. Dispositif selon l'une des revendications précédentes,
**caractérisé en ce que** l'enceinte (2) est formée par au moins deux pièces (12, 13) aptes à être animées d'un déplacement relatif l'une par rapport à l'autre, au moins l'une des pièces formant la partie mobile de l'enceinte (2).

10. Dispositif selon la revendication 9 prise en combinaison avec la revendication 7,
**caractérisé en ce que** lesdites pièces (12, 13) affectent chacune la forme d'un cylindre (121, 131), lesdits cylindres (121, 131) étant montés coaxiaux et disposés l'un à l'intérieur de l'autre, le cylindre (121) externe étant muni, au niveau de sa paroi périphérique cylindrique de délimitation, au moins d'une ouverture (1211) et d'une zone (1212) perméable aux rayonnements, ledit cylindre (131) interne étant muni, au niveau de sa paroi périphérique cylindrique de délimitation, d'une ouverture (1311), lesdits cylindres (121, 131) étant montés sur le bâti (11) support solidaires en rotation autour d'un axe commun de manière contrarotative, les ouvertures (1211, 1311) des cylindres externe (121) et interne (131), aptes à fermer l'ouverture (8) de chargement de l'enceinte (2), étant positionnables en regard l'une de l'autre et en regard d'un premier volume extérieur à l'enceinte (2) formant la zone (3) de chargement de l'enceinte (2) en configuration de chargement de l'enceinte (2), les ouvertures (1211, 1311) des cylindres externe (121) et interne (131), aptes à former l'ouverture (9) de déchargement de l'enceinte (2), étant positionnables en regard l'une de l'autre et en regard d'un deuxième volume extérieur à l'enceinte formant la zone (4) de déchargement de l'enceinte (2) en configuration de déchargement de l'enceinte (2), la zone (1212) perméable aux rayonnements du cylindre (121) externe et l'ouverture (1311) du cylindre (131) interne étant positionnables en regard l'une de l'autre et en regard de la zone (6) d'acquisition de données en configuration d'acquisition de données.

11. Dispositif selon l'une des revendications précédentes,
**caractérisé en ce que** le dispositif comprend des moyens anti-retour (16) de l'enceinte (2) en configuration de chargement configurés pour, en configuration d'acquisition de données de l'enceinte, empêcher le retour de l'enceinte (2), en configuration de chargement avant passage par la configuration de déchargement, lesdits moyens anti-retour (16) étant de préférence des moyens activables/désactivables, lesdits moyens anti-retour (16) étant activables au moins en configuration d'acquisition de données de l'enceinte lors du passage de l'enceinte (2) de la configuration de chargement à la configuration d'acquisition de données et désactivables en configuration de déchargement de l'enceinte (2).

12. Dispositif selon l'une des revendications précédentes,
**caractérisé en ce que** le dispositif comprend des moyens (15) de rappel de l'enceinte (2) en configuration de chargement de l'enceinte (2).

13. Dispositif selon la revendication 12 prise en combinaison avec la revendication 7,
**caractérisé en ce que** le bâti (11) support délimite un volume formant au moins une partie de la zone (4) de déchargement, cette zone (4) de déchargement comprenant, au niveau de la zone de transition avec l'enceinte (2), un capteur (17) de présence et **en ce que** les moyens (16) anti-retour sont, en configuration de déchargement de l'enceinte (2), configurés pour être désactivés en fonction des signaux reçus par ledit capteur (17).

14. Dispositif selon l'une des revendications précédentes,
**caractérisé en ce que** la partie des moyens (5) d'acquisition de données disposée dans la zone (6) d'acquisition de données comprend un lecteur (18) de données apte à lire, dans un périmètre prédéterminé, sans contact, les données de supports (31) de données aptes à être associés aux objets (30) à transférer.

## Patentansprüche

1. Vorrichtung (1) zum Transfer mindestens eines Objekts (30), wobei die Vorrichtung (1) einen Transferbehälter (2), eine Beladungszone (3) des Behälters (2) mit Objekt (30), mit der der Behälter (2) imstande ist zu kommunizieren, eine Entladungszone (4) des Behälters (2) mit Objekt (30), mit der der Behälter (2) imstande ist zu kommunizieren, wobei die Beladungs- (3) und Entladungszone (4) unterschiedlich sind, Datenerfassungsmittel (5) relativ zu dem mindestens einen Objekt (30) im Innern des Behälters, wobei mindestens ein Teil der Erfassungsmittel (5) in einer Datenerfassungszone (6) außerhalb des Behälters (2) angeordnet ist, Isolationsmittel (7) des Teils der Datenerfassungsmittel (5), die in der Datenerfassungszone (6) angeordnet sind, von mindestens der Beladungszone (3), wobei diese Isolationsmittel konfiguriert sind, um mindestens jedwede Datenerfassung relativ zu einem in der Beladungszone (3) vorhandenen Objekt zu verhindern, Verhinderungs-/Gestattungsmittel (10) einer Datenerfassung relativ zu einem eventuell im Behälter vorhandenen Objekt (30) umfasst, wobei mindestens ein Teil des Behälter (2) bewegbar montiert ist, um dem Behälter (2) zu erlauben, aufeinanderfolgend mindestens drei Konfigurationen einzunehmen, nämlich eine erste Ladekonfiguration, in welcher der Behälter (2) mit der Beladungszone (3) des Behälters durch eine Öffnung des Behälters (2), bezeichnet als Beladungsöffnung (8) des Behälters, in Kommunikation ist, wobei die Kommunikation des Behälters (2) mit der Entladungszone (4) geschlossen ist und die Datenerfassung relativ zu einem eventuell im Behälter (2) vorhandenen Objekt (30) durch die Datenerfassungsmittel (5) verhindert ist, eine zweite Datenerfassungskonfiguration, in welcher die Kommunikation des Behälters (2) mit der Beladungszone (3) geschlossen ist und die Datenerfassung relativ zu einem eventuell im Behälter (2) vorhandenen Objekt durch die Datenerfassungsmittel (5) gestattet ist, und eine dritte Entladungskonfiguration, in welcher der Behälter (2) mit der Entladungszone (4) durch eine Öffnung des Behälters, bezeichnet als Entladungsöffnung (9) des Behälters (2), in Kommunikation ist und die Kommunikation des Behälters (2) mit der Beladungszone (3) geschlossen ist, **dadurch gekennzeichnet, dass** die Isolationsmittel (7) des Teils der Datenerfassungsmittel (5), der in der Datenerfassungszone (6) angeordnet ist, eine Abdeckung (14) umfassen, welche die Datenerfassungsmittel (5), die in dieser Zone (6) angeordnet sind, teilweise abdecken, wobei diese Abdeckung (14) für Strahlen undurchdringlich ist, wobei diese Abdeckung (14) eine Aufnahmekammer der Datenerfassungsmittel neben dem Behälter (2) bildet und in Richtung des Behälters (2) mindestens in Datenerfassungskonfiguration des Behälters (2) geöffnet ist.

2. Vorrichtung nach Anspruch 1,
**dadurch gekennzeichnet, dass** in der Datenerfassungskonfiguration die Kommunikation des Behälters (2) mit der Entladungszone (4) geschlossen ist.

3. Vorrichtung nach einem der vorangehenden Ansprüche,
**dadurch gekennzeichnet, dass** in der Entladungskonfiguration die Datenerfassung relativ zu einem eventuellen Objekt (30) im Behälter (2) durch die Datenerfassungsmittel (5) verhindert ist.

4. Vorrichtung nach einem der vorangehenden Ansprüche,
**dadurch gekennzeichnet, dass**, wobei die Datenerfassungsmittel (5) aktivierbare/deaktivierbare Erfassungsmittel sind, die Verhinderungs-/Genehmigungsmittel (10) einer Datenerfassung relativ zu einem eventuell in dem Behälter vorhandenen Objekt (30) Steuermittel (100) der Aktivierung/Deaktivierung der Datenerfassungsmittel (5) umfassen, wobei die Datenerfassungsmittel (5) konfiguriert sind, um in Datenerfassungskonfiguration des Behälters (2) aktiviert zu sein und mindestens in Beladungskonfiguration, vorzugsweise in Beladungs- und Entladungskonfiguration des Behälters (2), deaktiviert zu sein.

5. Vorrichtung nach einem der vorangehenden Ansprüche,
**dadurch gekennzeichnet, dass** die Verhinderungs-/Genehmigungsmittel (10) einer Datenerfassung relativ zu einem eventuell im Behälter (2) vorhandenen Objekt Teile (101, 102) des Behälters (2) umfassen, der einen oder Behälterteile (101) aufweist, die strahlungsdurchlässig sind, zwischenstellbar zwischen der Datenerfassungszone (6) und dem Innern des Behälters (2) in Datenerfassungskonfiguration, und einen oder Behälterteile (102), die strahlungsundurchlässig sind, zwischenstellbar zwischen der Datenerfassungszone (6) und dem Innern des Behälters (2) mindestens in Beladungskonfiguration des Behälters (2), vorzugsweise in Beladungs- und Entladungskonfiguration des Behälters (2).

6. Vorrichtung nach einem der vorangehenden Ansprüche,
**dadurch gekennzeichnet, dass** die Entladungsöffnung (9) des Behälters in Entladungskonfiguration des Behälters im unteren Teil des Behälters (2) für eine Entladung durch Schwerkraft positioniert ist.

7. Vorrichtung nach einem der vorangehenden Ansprüche,
**dadurch gekennzeichnet, dass** sie ein Tragegestell (11) des Behälters (2) umfasst und dass mindestens der Teil der Datenerfassungsmittel (5), der in der Datenerfassungszone (6) angeordnet ist, vorzugsweise fest auf dem Tragegestell (11) montiert ist.

8. Vorrichtung nach Anspruch 7,
**dadurch gekennzeichnet, dass** der bewegbare Teil des Behälters (2) rotierend oder verschiebend bewegbar in Bezug zum Tragegestell (11) montiert ist.

9. Vorrichtung nach einem der vorangehenden Ansprüche,
**dadurch gekennzeichnet, dass** der Behälter (2) von mindestens zwei Stücken (12, 13) gebildet ist, die imstande sind, für eine relative Verlagerung zueinander bewegt zu sein, wobei mindestens eines der Stücke den bewegbaren Teil des Behälters (2) bildet.

10. Vorrichtung nach Anspruch 9 herangezogen in Kombination mit Anspruch 7,
**dadurch gekennzeichnet, dass** die Stücke (12, 13) jeweils die Form eines Zylinders (121, 131) haben, wobei die Zylinder (121, 131) koaxial montiert sind und ineinander angeordnet sind, wobei der äußere Zylinder (121) im Bereich seiner zylindrischen Umfangsbegrenzungswand mit mindestens einer Öffnung (1211) und einer strahlungsdurchlässigen Zone (1212) ausgestattet ist, wobei der innere Zylinder (131) im Bereich seiner zylindrischen Umfangsbegrenzungswand mit mindestens einer Öffnung (1311) ausgestattet ist, wobei die Zylinder (121, 131) auf dem Tragegestell (11) fest verbunden um eine gemeinsame Achse in Gegenrotation rotierend montiert sind, wobei die Öffnungen (1211, 1311) des äußeren Zylinders (121) und inneren Zylinders (131), die imstande sind, die Beladungsöffnung (8) des Behälters (2) zu schließen, einander gegenüber und gegenüber einem ersten, zum Behälter (2) äußeren Volumen, das die Beladungszone (3) des Behälters (2) in Beladungskonfiguration des Behälters (2) bildet, positionierbar sind, wobei die Öffnungen (1211, 1311) des äußeren Zylinders (121) und inneren Zylinders (131), die imstande sind, die Entladungsöffnung (9) des Behälters (2) zu bilden, einander gegenüber und gegenüber einem zweiten, zum Behälter äußeren Volumen, das die Entladungszone (4) des Behälters (2) in Entladungskonfiguration des Behälters (2) bildet, positionierbar sind, wobei die strahlungsdurchlässige Zone (1212) des äußere Zylinders (121) und die Öffnung (1311) des inneren Zylinders (131) in Datenerfassungskonfiguration einander gegenüber und gegenüber der Datenerfassungszone (6) positionierbar sind.

11. Vorrichtung nach einem der vorangehenden Ansprüche,
**dadurch gekennzeichnet, dass** die Vorrichtung Anti-Rückkehr-Mittel (16) des Behälters (2) in Beladungskonfiguration umfasst, die konfiguriert sind, um in Datenerfassungskonfiguration des Behälters die Rückkehr des Behälters (2) in Beladungskonfiguration vor Absolvieren der Entladungskonfiguration zu verhindern, wobei die Anti-Rückkehr-Mittel (16) vorzugsweise aktivierbare/deaktivierbare Mittel sind, wobei die Anti-Rückkehr-Mittel (16) mindestens in Datenerfassungskonfiguration des Behälters beim Übergang des Behälters (2) von der Beladungskonfiguration in die Datenerfassungskonfiguration aktivierbar und in Entladungskonfiguration des Behälters (2) deaktivierbar sind.

12. Vorrichtung nach einem der vorangehenden Ansprüche,
**dadurch gekennzeichnet, dass** die Vorrichtung Rückstellmittel (15) des Behälters (2) in Beladungskonfiguration des Behälters (2) umfasst.

13. Vorrichtung nach Anspruch 12, herangezogen in Kombination mit Anspruch 7,
**dadurch gekennzeichnet, dass** das Tragegestell (11) ein Volumen begrenzt, das mindestens einen Teil der Entladungszone (4) bildet, wobei diese Entladungszone (4) im Bereich der Übergangszone mit dem Behälter (2) einen Präsenzsensor (17) umfasst und dass die Anti-Rückkehr-Mittel (16) in Entladungskonfiguration des Behälters (2) konfiguriert sind, um in Abhängigkeit von den vom Sensor (17) empfangenen Signalen deaktiviert zu sein.

14. Vorrichtung nach einem der vorangehenden Ansprüche,
**dadurch gekennzeichnet, dass** der Teil der Datenerfassungsmittel (5), der in der Datenerfassungszone (6) angeordnet ist, ein Datenlesegerät (18) umfasst, das imstande ist, innerhalb eines vorbestimmten Umkreises kontaktlos die Daten von Datenträgern (31) zu lesen, die imstande sind, den zu transferierenden Objekten (30) zugeordnet zu sein.

## Claims

1. A device (1) for transferring at least one object (30), said device (1) comprising a so-called transfer chamber (2), a loading zone (3) for loading the chamber (2) with objects (30), with which said chamber (2) is able to communicate, an unloading zone (4) for unloading objects (30) from the chamber (2) with which said chamber (2) is able to communicate, said loading (3) and unloading (4) zones being separate, means (5) for acquiring data relative to said at least one object (30) inside the chamber, at least part of said acquisition means (5) being positioned in a so-called data acquisition zone (6) outside the chamber (2), means (7) for isolating the part of the data acquisition means (5) situated in the data acquisition zone (6) from at least the loading zone (3), these isolating means being configured to prevent at least any acquisition of data relative to an object present in said loading zone (3), means (10) for preventing/allowing the acquisition of data relative to a potential object (30) present in the chamber, at least part of the chamber (2) being mounted movably so as to allow the chamber (2) to successively assume at least three configurations, namely a first so-called loading configuration, in which the chamber (2) is in communication with the loading zone (3) of the chamber via an opening of the chamber (2) called loading opening (8) of the chamber, the communication of the chamber (2) with the unloading zone (4) is closed, and the acquisition of data relative to any object (30) present in the chamber (2) by the data acquisition means (5) is prevented, a second so-called data acquisition configuration in which the communication of the chamber (2) with the loading zone (3) is closed, and the acquisition of data relative to any object present in the chamber (2) by the data acquisition means (5) is allowed, and a third so-called unloading configuration, in which the chamber (2) is in communication with the unloading zone (4) via an opening of the chamber called unloading opening (9) of the chamber (2), and the communication of the chamber (2) with the loading zone (3) is closed,
**characterized in that** the means (7) for isolating part of the data acquisition means (5) positioned in the data acquisition zone (6) comprise an enclosure (14) partially covering the data acquisition means (5) positioned in said zone (6), this enclosure (14) being impermeable to radiation, this enclosure (14) forming a housing compartment of said data acquisition means adjacent to the chamber (2) and open toward the chamber (2) at least in the data acquisition configuration of said chamber (2).

2. The device according to claim 1,
**characterized in that** in the data acquisition configuration, the communication of the chamber (2) with the unloading zone (4) is closed.

3. The device according to one of the preceding claims,
**characterized in that** in the unloading configuration, the acquisition of data relative to any object (30) in the chamber (2) by the data acquisition means (5) is prevented.

4. The device according to one of the preceding claims,
**characterized in that** the data acquisition means (5) being activatable/deactivatable acquisition means, the means (10) preventing/allowing a data acquisition relative to any object (30) present in the chamber comprise means (100) for commanding the activation/deactivation of said data acquisition means (5), said data acquisition means (5) being configured to be activated in the data acquisition configuration of the chamber (2) and deactivated at least in the loading configuration, preferably in the loading and unloading configurations of the chamber (2).

5. The device according to one of the preceding claims,
**characterized in that** the means (10) preventing/allowing a data acquisition relative to any object present in the chamber (2) comprise parts (101, 102) of the chamber (2) that include one or several chamber parts (101), permeable to radiation, able to be inserted between the data acquisition zone (6) and the inside of the chamber (2) in the data acquisition configuration, and one or several chamber parts (102), impermeable to radiation, able to be inserted between the data acquisition zone (6) and the inside of the chamber (2) at least in the loading configuration of the chamber (2), preferably in loading and unloading configurations of the chamber (2).

6. The device according to one of the preceding claims,
**characterized in that** the unloading opening (9) of the chamber is, in the unloading configuration of the chamber, positioned in the lower part of the chamber (2) for unloading by gravity.

7. The device according to one of the preceding claims,
**characterized in that** it comprises a support frame (11) of the chamber (2) and **in that** at least part of the data acquisition means (5) positioned in the data acquisition zone (6) is preferably mounted stationary on said support frame (11).

8. The device according to claim 7,
**characterized in that** the moving part of the chamber (2) is mounted moving by rotation or translation relative to said support frame (11).

9. The device according to one of the preceding claims,
**characterized in that** the chamber (2) is formed by at least two parts (12, 13) able to be driven in relative movement with respect to one another, at least one of the parts forming the moving part of the chamber (2).

10. The device according to claim 9 combined with claim 7,
**characterized in that** said parts (12, 13) each assume the form of a cylinder (121, 131), said cylinders (121, 131) being mounted coaxially and positioned inside one another, the outer cylinder (121) being provided, at its cylindrical peripheral delimiting wall, at least with an opening (1211) and a zone (1212) permeable to radiation, said inner cylinder (131) being provided, at its cylindrical peripheral delimiting wall, with an opening (1311), said cylinders (121, 131) being mounted on the support frame (11) secured in rotation around a shared axis in a contra-rotating manner, the openings (1211, 1311) of the outer (121) and inner (131) cylinders, able to close the loading opening (8) of the chamber (2), being able to be positioned across from one another and across from a first outer volume of the chamber (2) forming the loading zone (3) of the chamber (2) in the loading configuration of the chamber (2), the openings (1211, 1311) of the outer (121) and inner (131) cylinders, able to form the unloading opening (9) of the chamber (2), being able to be positioned across from one another and across from a second volume outside the chamber forming the unloading zone (4) of the chamber (2) in the unloading configuration of the chamber (2), the zone (1212) permeable to the radiation of the outer cylinder (121) and the opening (1311) of the inner cylinder (131) being able to be positioned across from one another and across from the data acquisition zone (6) in the data acquisition configuration.

11. The device according to one of the preceding claims,
**characterized in that** the device comprises a non-return means (16) for the chamber (2) in the loading configuration configured so as, in the data acquisition configuration of the chamber, to prevent the chamber (2), in the loading configuration before passing through the unloading configuration, from returning, said non-return means (16) preferably being activatable/deactivatable means, said non-return means (16) being activatable at least in the data acquisition configuration of the chamber during the passage of the chamber (2) from the loading configuration to the data acquisition configuration and deactivatable in the unloading configuration of the chamber (2).

12. The device according to one of the preceding claims,
**characterized in that** the device comprises means (15) for returning the chamber (2) to the loading configuration of the chamber (2).

13. The device according to claim 12 combined with claim 7,
**characterized in that** the support frame (11) defines a volume forming at least part of the unloading zone (4), this unloading zone (4) comprising, at the transition zone with the chamber (2), a presence sensor (17), and **in that** the non-return means (16) are, in the unloading configuration of the chamber (2), configured to be deactivated as a function of the signals received by said sensor (17).

14. The device according to one of the preceding claims,
**characterized in that** the part of the data acquisition means (5) positioned in the data acquisition zone (6) comprises a data reader (18) able to read, in a predetermined perimeter, without contact, the data from the data media (31) able to be associated with the objects (30) to be transferred.
